# EUROPEAN PATENT APPLICATION

(11) **EP 1 630 454 A1**
(43) Date of publication of application: **01.03.2006**
(21) Application number: 04078433.2
(22) Date of filing: 26.08.2004
(51) Int. Cl.: F16G 13/07, F16G 13/18

(54) **Chain**

(71) Applicant: Ashworth Jonge Poerink B.V., 7547 TC Enschede (NL)
(72) Inventor: Van Faassen, Willem, 7556 NL Hengelo (NL)
(74) Representative: 't Jong, Bastiaan Jacob

(57) **Abstract**

The invention relates to a chain, for example for a conveyor belt, which chain comprises:
- links (1) each comprising legs (3,4) extending in a longitudinal direction from a lateral cross-member (2) at a closed first end to an open second end, and defining laterally aligned first apertures (5) on each of said legs (3,4) at said open end, and laterally aligned second apertures (6) at said closed end;
- rods (10) for connecting links (1), wherein the first apertures (5) of a first link (1) are overlapping with the second apertures (6) of a second link (1), and wherein a rod (10) extends through the overlapping first (5) and second (6) apertures of the first and second link (1) respectively,

wherein both the first (5) and second (6) apertures are slot openings and that each link (1) comprises means for blocking (8) lateral movement of the rods in at least one direction, wherein the blocking means (8) comprise an insert opening (9) for inserting a rod (10) into the overlapping first (5) and second (6) apertures, and in that the insert opening (9) overlaps with the first apertures (5) and can only overlap with the second aperture (6) when the first and second links (1) are substantially tilted relatively to each other.

## Description

The invention relates to a chain, for example for a conveyor belt, which chain comprises:
- links each comprising legs extending in a longitudinal direction from a lateral cross-member at a closed first end to an open second end, and defining laterally aligned first apertures on each of said legs at said open end, and laterally aligned second apertures at said closed end;
- rods for connecting links, wherein the first apertures of a first link are overlapping with the second apertures of a second link, and wherein a rod extends through the overlapping first and second apertures of the first and second link respectively.

Such chains are used in conveyor belts, which are commonly used in the food industry. With such chains according to the prior art it is common to press the rod into the apertures to provide a rigid connection between the links and the rods. In order to improve this connection the ends of the rods are provided with notches, which increase the firmness of the connection between rod and link. This connection is essential because when a rod is disconnected from the link, the chain could fall apart.

Such press connections with or without notches according to the prior art have the disadvantage that bacteria could be present between the rod and the link. Due to the firm connection it cannot be inspected wether bacteria are present between the rod and the link or not.

Such a connection according to the prior art is also extremely difficult to clean. Due to the extremely small spaces between the rod and the link any regular cleaning fluid will not enter these spaces, leaving bacteria alive.

When such a chain according to the prior art is used in the food industry it is often necessary, due to inspection regulations to disassemble the chain. In such a case the rods have to be disconnected from the links requiring special tools for removing the rod from the link and for reconnecting the rods to the link.

It is an object of the invention to provide a chain, which alleviates the above-mentioned disadvantages.

This object is achieved by a chain according to the invention, which is characterized in that both the first and second apertures are slot openings and that each link comprises means for blocking lateral movement of the rods in at least one direction, wherein the blocking means comprise an insert opening for inserting a rod into the overlapping first and second apertures, and in that the insert opening overlaps with the first apertures and can only overlap with the second aperture when the first and second links are substantially tilted relatively to each other.

By using only slot openings the rod can be shifted and the apertures can be inspected with regard to the presence of any bacteria. Also due to the slot openings it is possible to easily clean the links. The loose arrangement of the rods in the links has also the advantage that vibrations are not directly transferred to the next link, preventing vibration of a complete belt.

As a rod will easily fall out of such links, when only slot openings are used, the chain according to the invention also comprises blocking means, which prevent the rods from shifting out the links.

The insert opening provides the possibility to shift the rod into the link when assembling a chain out of links. According to the invention this insert opening is provided such that the insert opening only overlaps both the first apertures and the second apertures when the first and second links are substantially tilted relatively to each other. So only when the specific links can be rotated relatively to each other the rod can be taken out. Such a situation could only exist when the chain is out of use. So when the chain is in use there is no possibility of the rods moving in lateral direction, which could cause the chain to fall apart. One has to take the chain out of use and then by tilting two links relatively to each other one can take out the rod and the chain can be cleaned thoroughly. This does not enable any specific tools and results in a simply cleanable and inspectible chain.

In a preferred embodiment of the invention the insertion depth of the first link into the second link is smaller than the distance between the insert opening and the open end of the second link. This ensures that the first and second link always have to be tilted relatively to each other in order to insert the rod into both links.

In another embodiment of the invention, the blocking means comprise a rib extending parallel to the first apertures. This embodiment is easy to manufacture.

Preferably the links are of a plastic and could be manufactured by injection moulding.

The invention furthermore relates to a method for assembling a chain according to the invention, which method comprises the steps of:
- providing the links;
- positioning a first link and a second link tilted relatively to each other and wherein the first apertures of the first link are overlapping with the second apertures of the second link and wherein the insert opening is overlapping with the first and second apertures.
- inserting through the insert opening and the first and second apertures a rod; and
- aligning the first and second link.

These and other features of the invention will be elucidated in conjunction with the accompanying drawings.

Figure 1 shows a perspective view of a first embodiment of a link according to the invention.

Figure 2 shows a cross sectional view of two links and a rod providing part of a chain according to the invention.

Figure 3 shows a perspective view of two links being tilted relatively to each other enabling removal of the rod.

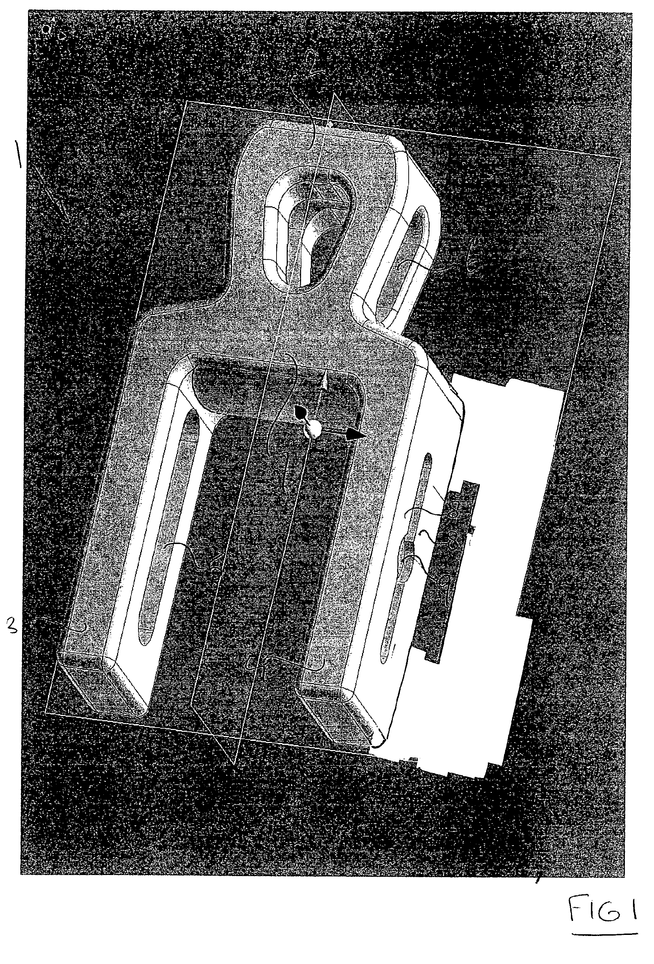

Figure 1 shows a perspective view of a first embodiment of a link according to the invention. This link 1 has a lateral cross member 2 and two legs 3 and 4 extending from this cross member 2 into the longitudinal direction. Both legs 3 and 4 have first slot shaped apertures 5 and second slot shaped apertures 6. Between the first apertures 5 and the second apertures 6 a second cross member 7 is arranged to increase the stiffness of the legs 3 and 4.

Leg 4 is provided with two ribs 8, which provide blocking means and define an insert opening 9 through which a rod can be inserted.

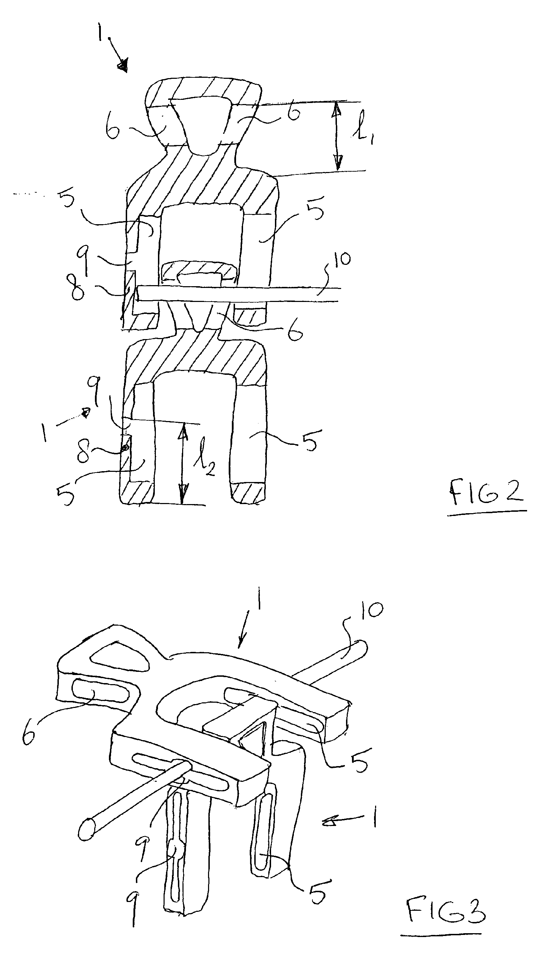

Figure 2 shows a cross sectional view of two links 1, which are connected by a rod 10. Both links 1 are aligned similar to a position in which the links are in use. The insertion depth L1 of the link 1 is smaller than the distance L2 between the insert opening 9 and the open end of the link 1. This prevents that the rod 10 can be shifted laterally, when the links 1 are in aligned position.

In figure 3 the links 1 are shown in a tilted position relatively to each other and in this way it is possible to shift out the rod 10 through the insert opening 9. In this way the links 1 and rods 10 can easily be disassembled and easily be cleaned.

## Claims

1. Chain, for example for a conveyor belt, which chain comprises:
- links each comprising legs extending in a longitudinal direction from a lateral cross-member at a closed first end to an open second end, and defining laterally aligned first apertures on each of said legs at said open end, and laterally aligned second apertures at said closed end;
- rods for connecting links, wherein the first apertures of a first link are overlapping with the second apertures of a second link, and wherein a rod extends through the overlapping first and second apertures of the first and second link respectively,
**characterized in that**
both the first and second apertures are slot openings and that each link comprises means for blocking lateral movement of the rods in at least one direction, wherein the blocking means comprise an insert opening for inserting a rod into the overlapping first and second apertures, and **in that** the insert opening overlaps with the first apertures and can only overlap with the second aperture when the first and second links are substantially tilted relatively to each other.

2. Chain according to claim 1, wherein the insertion depth of the first link into the second link is smaller than the distance between the insert opening and the open end of the second link.

3. Chain according to claim 1 or 2, wherein the blocking means comprise a rib extending parallel to the first apertures.

4. Chain according to any of the preceding claims, wherein the links are of a plastic.

5. Chain according to claim 4, wherein the links are injection molded.

6. Method for assembling a chain according to any of the preceding claims, which method comprises the steps of:
- providing the links;
- positioning a first link and a second link tilted relatively to each other and wherein the first apertures of the first link are overlapping with the second apertures of the second link and wherein the insert opening is overlapping with the first and second apertures.
- inserting through the insert opening and the first and second apertures a rod; and
- aligning the first and second link.
